Europäisches Patentamt

European Patent Office

Office européen des brevets

(19)

(11) **EP 1 245 087 B1**

(12) **FASCICULE DE BREVET EUROPEEN**

(45) Date de publication et mention
de la délivrance du brevet:
**05.10.2005 Bulletin 2005/40**

(51) Int Cl.⁷: **H04B 10/18**

(86) Numéro de dépôt international:
**PCT/FR2000/002924**

(21) Numéro de dépôt: **00969658.4**

(22) Date de dépôt: **20.10.2000**

(87) Numéro de publication internationale:
**WO 2001/029995 (26.04.2001 Gazette 2001/17)**

(54) **PROCEDE D'AJUSTEMENT DE PUISSANCE POUR UN SYSTEME DE TRANSMISSION OPTIQUE A MULTIPLEXAGE EN LONGUEUR D'ONDE**

**VERFAHREN ZUR LEISTUNGSREGELUNG FÜR EIN OPTISCHES WDM ÜBERTRAGUNGSSYSTEM**

**POWER ADJUSTMENT METHOD FOR A WAVELENGTH DIVISION MULTIPLEXING OPTICAL TRANSMISSION SYSTEM**

(84) Etats contractants désignés:
**AT BE CH CY DE DK ES FI FR GB GR IE IT LI LU MC NL PT SE**

(30) Priorité: **22.10.1999 FR 9913194**

(43) Date de publication de la demande:
**02.10.2002 Bulletin 2002/40**

(73) Titulaire: **Corvis France R&D
22300 Lannion (FR)**

(72) Inventeur: **GEORGES, Thierry
F-22700 Perros Guirec (FR)**

(74) Mandataire: **Callon de Lamarck, Jean-Robert et al
Cabinet Régimbeau
20, rue de Chazelles
75847 Paris cedex 17 (FR)**

(56) Documents cités:
• **PATENT ABSTRACTS OF JAPAN vol. 1996, no. 12, 26 décembre 1996 (1996-12-26) & JP 08 223136 A (NIPPON TELEGR &AMP;TELEPH CORP &LT;NTT&GT;), 30 août 1996 (1996-08-30)**
• **CHRAPLYVY A R ET AL: "EQUALIZATION IN AMPLIFIED WDM LIGHTWAVE TRANSMISSION SYSTEMS" IEEE PHOTONICS TECHNOLOGY LETTERS,US,IEEE INC. NEW YORK, vol. 4, no. 8, 1 août 1992 (1992-08-01), pages 920-922, XP000293636 ISSN: 1041-1135**

EP 1 245 087 B1

## Description

La présente invention est relative à un procédé d'ajustement de puissance pour un système de transmission optique à multiplexage en longueur d'onde.

La transmission d'un canal optique numérique, notamment sur une liaison amplifiée, est limitée d'une part, pour les faibles puissances, par le bruit et d'autre part, pour les fortes puissances, par les effets non linéaires.

Pour toute liaison amplifiée, il existe une puissance optimale en sortie de chacun des amplificateurs qui assure le taux d'erreur le plus faible.

Dans le cas d'une transmission sans multiplexage en longueur d'onde, cette puissance optimale peut être ajustée par la puissance de pompe de chaque amplificateur.

Par contre, dans le cas où la transmission met en oeuvre un multiplexage en longueur d'onde, il n'est plus possible d'ajuster individuellement le gain de chacun des signaux, car la réponse en longueur d'onde des amplificateurs n'est pas plate.

Trois techniques principales ont été présentées pour résoudre ce problème.

L'une d'elle consiste à optimiser les dopants de la fibre amplificatrice ainsi que de l'inversion de population moyenne : une platitude de l'ordre de 1.5 dB sur 30 nm peut ainsi être obtenue pour un gain de 25 dB.

On pourra par exemple à cet égard se référer à la publication suivante :

- K. Inoue, T. Kominato, H. Toba, IEEE Photon. Techn. Letters 3, 718 (1991) Sulhoff, Smart, Zyskind, Nagel, DiGiovanni, « Gain peaking in concatenated 980-nm-pumped EDFAs », OFC'94, p. 40 (1994).

Une autre technique consiste à utiliser des filtres optiques.

En général, ces deux premières techniques sont utilisées afin de limiter les variations de gain à quelques dixièmes de dB.

Une troisième technique encore consiste à pré-accentuer les signaux, c'est à dire à réduire la puissance d'entrée des longueurs d'onde ayant un gain fort et à augmenter la puissance d'entrée des signaux dont le gain est faible. On considère alors que la pré-accentuation est optimisée lorsque les rapports signal à bruit des différents canaux sont égaux.

Une technique de ce type est notamment décrite dans :

- Chaplyvy, Nagel, Tkach : « Equalization in Amplified WDM Lightwave Transmission Systems », IEEE Photon. Techn. Lett. 4, 8 (1992).
- Chraplyvy, Tkach, Reichmann, Magill, Nagel : « End-to-end equalization experiments in amplified WDM lightwave systems », IEEE Photon. Techn. Lett. 4, 428 (1993).

Cette technique ne permet cependant pas de corriger des différences de gain cumulées supérieures à 25 dB. En outre, elle augmente la pénalité non linéaire pour un rapport signal à bruit donné.

Par ailleurs, une des sources principales de dégradation sur un système de transmission terrestre à multiplexage en longueur d'onde, dont les amplificateurs ont un gain égalisé, est la variation de la courbe de gain en fonction de la température. Cette variation est de l'ordre de 1 dB pour 25 dB de gain sur une plage de 50°C de température. Egalement, la variation des pertes de la ligne est un autre facteur de dégradation de la platitude du gain des amplificateurs.

Pour résoudre ce problème, il a été proposé, notamment dans la demande de brevet EP 580.497, un dispositif qui ajuste les paramètres de la source en fonction du taux d'erreur estimé ou mesuré à la réception.

Toutefois, l'information sur le taux d'erreur n'est pas toujours disponible à la réception.

Il a déjà été proposé, notamment dans l'abrégé du brevet japonais JP 08 223136, des techniques consistant à égaliser des gains au niveau de chaque amplificateur d'une ligne de transmission.

L'invention propose quant à elle un procédé qui permet de façon simple d'égaliser en permanence les performances de transmission de différents canaux multiplexés en longueur d'onde.

Plus particulièrement, elle propose un procédé d'ajustement de puissance pour un système de transmission optique à multiplexage en longueur d'onde comportant des moyens d'émission, une ligne de transmission optique et des moyens de réception, caractérisé en ce que, pour chaque canal de longueur d'onde, on ajuste la puissance émise par les moyens émetteurs pour ledit canal en fonction des puissances optiques reçues pour ledit canal au niveau d'une pluralité de points répartis le long de la ligne de transmission.

Un tel procédé est avantageusement complété par les différentes caractéristiques suivantes prises seules ou selon toutes leurs combinaisons techniquement possibles :

- les différents points répartis le long de la ligne de transmission sont les entrées d'amplificateurs répartis sur ladite ligne ;
- pour chaque canal, on détermine en permanence en fonction des puissances optiques reçues pour ledit canal au niveau d'une pluralité de points répartis le long de la ligne de transmission, une puissance de consigne devant être reçue pour ledit canal au niveau d'un des points de la ligne de transmission et on commande les moyens émetteurs de façon à asservir la puissance audit point sur ladite puissance de consigne ;
- ledit point est l'entrée du premier amplificateur ;
- on détermine, pour chaque canal i, un paramètre $f_i$

qui est fonction des puissances reçues aux différents points de la ligne de transmission, et on modifie la puissance de consigne en remplaçant sa valeur précédente par une valeur de consigne qui est fonction de ladite valeur précédente ainsi que du paramètre $f_i$ ;

- la nouvelle puissance de consigne est le produit de la valeur de consigne précédente et d'une fonction du paramètre $f_i$ ;
- le paramètre $f_i$ est rapporté à la moyenne $\bar{f}$ des paramètres $f_i$ déterminés pour les différents canaux ;
- le paramètre $f_i$ est tel que :

$$f_i = \sum_{j=1,m} P_{ij}^{-1}.$$

où $P_{ij}$ représente la puissance du jième point de la ligne de transmission pour le canal i et où m est le nombre de points de ladite ligne.

- la nouvelle puissance de consigne est le produit de la valeur de consigne précédente et d'un produit η. $f_i$ où le paramètre η est choisi de manière à ne pas modifier la puissance totale des signaux à l'émission.

L'invention propose en outre un système pour la transmission optique, notamment d'impulsions de type RZ, caractérisé en ce qu'il comporte des moyens pour mettre en oeuvre un tel procédé.

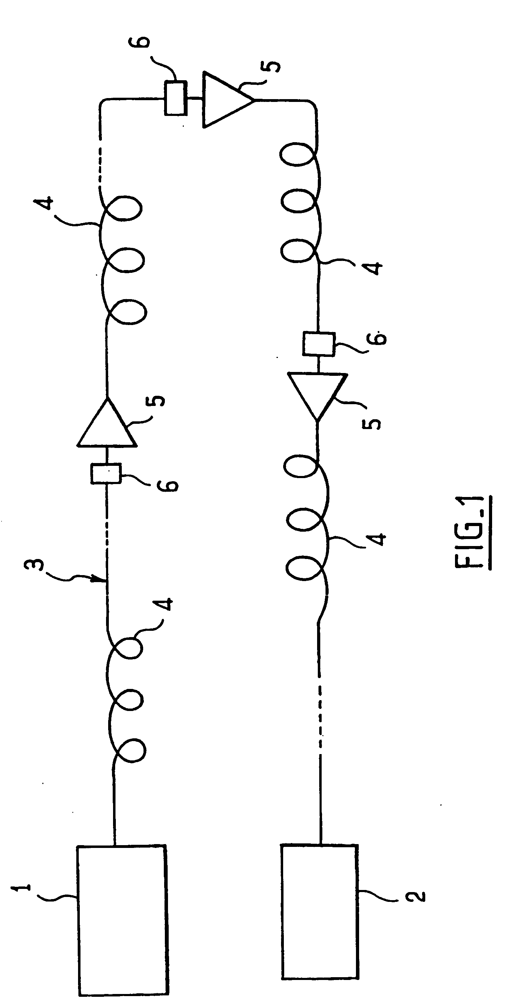

D'autres caractéristiques et avantages de l'invention ressortiront encore de la description qui suit, laquelle est purement illustrative et non limitative et doit être lue en regard du dessin annexé sur lequel la figure 1 représente schématiquement un système de transmission optique sur lequel un procédé conforme à l'invention peut être mis en oeuvre.

Le système de transmission représenté sur cette figure comporte des moyens émetteurs 1, des moyens récepteurs 2 et une ligne de transmission 3 qui est par exemple une ligne de transmission terrestre et qui s'étend entre lesdits moyens émetteurs et récepteurs 1 et 2.

Les moyens émetteurs 1 et les moyens récepteurs 2 comportent des moyens de multiplexage/démultiplexage qui permettent de transmettre simultanément sur la ligne 3 plusieurs canaux correspondant à différentes longueurs d'onde de transmission.

Les signaux qu'ils émettent et reçoivent sont avantageusement des signaux à impulsions RZ et notamment des solitons.

La ligne 3 comporte plusieurs sections 4 de fibre optique entre lesquelles sont interposés des amplificateurs 5.

Elle comporte au niveau de chaque amplificateur 5 - comme c'est d'ailleurs habituellement le cas pour toute ligne de transmission - des moyens 6 qui permettent de mesurer ou déduire la puissance en entrée d'un tel amplificateur 5 et de renvoyer sur les moyens émetteurs 1 une information sur ladite puissance, en utilisant par exemple un canal optique auxiliaire correspondant à une longueur d'onde différente de celle des canaux de transmission.

Ainsi, les moyens émetteurs 1 connaissent en permanence la puissance $P_{lj}$, qui est la puissance du canal l à l'entrée de l'amplificateur j, et ce pour i variant de 1 à n et j variant de 1 à m, où n est le nombre de canaux de transmission et où m est le nombre d'amplificateurs 5.

Les moyens émetteurs 1 comportent des moyens de calcul qui déterminent, pour chaque canal i et en fonction des différentes puissances $P_{ij}$ mesurées, pour ledit canal $i_1$ en entrée de chacun des m amplificateurs, un niveau de puissance $P_{i1}$ qui devrait être celui en entrée du premier amplificateur, pour ledit canal i. Lesdits moyens émetteurs ajustent alors la puissance qu'ils émettent pour ledit canal i, de façon à la faire converger vers cette valeur.

A titre d'exemple, les moyens de calcul déterminent pour chaque canal i une valeur $f_i$ qui est fonction des puissances $(P_{ij})_{j=1,m}$.

Ils calculent la moyenne $\bar{f}$ des fonctions $f_i$ et rapportent ces fonctions $f_i$ à cette moyenne.

Ils modifient la consigne de la puissance d'entrée en remplaçant $P_{i0}$ par $P'_{i0}$ telle que :

$$P'_{il} = \eta\, G(f_i) P_{i1}$$

où η est tel que

$$\sum_i P'_{il} = \Sigma P_{ij}.$$

où G est une fonction prédéterminée.

Une fonction $f_i$ particulièrement intéressante est :

$$f_i = \sum_{j=1,m} P_{ij}^{-1}.$$

Des fonctions plus affinées prenant en compte le gain de l'amplificateur ou la variation du facteur de bruit en fonction de la longueur d'onde peuvent être envisagées.

On notera que les valeurs $f_i$ peuvent être calculées par les moyens de calcul ou être obtenues par tout autre moyen et notamment par des moyens analogiques utilisant les signaux transmis par le canal auxiliaire.

La fonction G correspond quant à elle avanta-

geusement à la fonction :

$$G(x)=x.$$

D'autres fonctions peuvent être envisagées, notamment pour accélérer la convergence.

La fonction $G$ peut également dépendre des puissances en ligne et avoir une fonction d'écrêtage pour limiter les effets non linéaires.

Un autre exemple de fonction $f_i$ avantageuse lorsqu'on ne peut pas mesurer les puissances en ligne ou lorsque l'on ne veut pas interférer avec les routines d'égalisation de gain automatique en ligne et éviter ainsi les instabilités est :

$$f_l = 1/(P_{i1}.P_{lm})^{1/2}$$

On notera que la technique qui vient d'être décrite est particulièrement efficace lorsqu'un signal au format RZ, et en particulier à impulsions solitons, est utilisé, car les limites non linéaires sont alors repoussées vers des puissances élevées.

## Revendications

1.   , Procédé d'ajustement de puissance pour un système de transmission optique à multiplexage en longueur d'onde comportant des moyens d'émission (1), une ligne de transmission optique (3) et des moyens de réception (2), **caractérisé en ce que**, pour chaque canal de longueur d'onde; on ajuste la puissance émise par les moyens émetteurs (1) pour ledit canal en fonction des puissances optiques reçues pour ledit canal au niveau d'une pluralité de points répartis te long de la ligne de transmission (3).

2.   Procédé selon la revendication 1, **caractérisé en ce que** les différents points répartis le long de la ligne de transmission (3) sont les entrées d'amplificateurs (5) répartis sur ladite ligne (3).

3.   Procédé selon l'une des revendications précédentes, **caractérisé en ce que** pour chaque canal, on détermine en permanence en fonction des puissances optiques reçues pour ledit canal au niveau d'une pluralité de points répartis le long de la ligne de transmission (3), une puissance de consigne devant être reçue pour ledit canal au niveau d'un des points de la ligne de transmission (3) et on commande les moyens émetteurs (1) de façon à asservir la puissance audit point sur ladite puissance de consigne.

4.   Procédé selon les revendications 2 et 3 prises en combinaison, **caractérisé en ce que** ledit point est l'entrée du premier amplificateur (5).

5.   Procédé selon l'une des revendications 3 et 4, **caractérisé en ce qu'**on détermine, pour chaque canal i, un paramètre $f_i$ qui est fonction des puissances reçues aux différents points de la ligne de transmission (3) et **en ce qu'**on modifie la puissance de consigne en remplaçant sa valeur précédente par une valeur de consigne qui est fonction de ladite valeur précédente ainsi que du paramètre $f_i$.

6.   Procédé selon la revendication 5, **caractérisé en ce que** la nouvelle puissance de consigne est le produit de la valeur de consigne précédente et d'une fonction du paramètre $f_i$.

7.   Procédé selon la revendication 5, **caractérisé en ce que** le paramètre $f_i$ est rapporté à la moyenne $\bar{f}$ des paramètres $f_i$ déterminés pour les différents canaux.

8.   Procédé selon l'une des revendications 5 à 7, **caractérisé en ce que** le paramètre $fi$ est tel que :

$$f_i = \cdot\sum_{j=1,m} P_{ij}^{-1} \cdot$$

où $P_{ij}$ représente la puissance du jième point de la ligne de transmission (3) pour la canal i et où m est la nombre de points de ladite ligne.

9.   Procédé selon l'une des revendications 5 à 7 **caractérisé en ce que** le paramètre $f_i$ est tel que :

$$f_i = 1/(P_{l1}, P_{im})^{1/2}$$

10.  Procédé selon les revendications 6 et 7 prises en combinaison, **caractérisé en ce que** la nouvelle puissance de consigne est le produit de la valeur de consigne précédente et d'un produit $\eta.f_i$ $\eta$ étant un facteur de pondération choisi pour que la puissance totale reçue par le premier amplificateur soit constante.

11.  Système pour la transmission optique, notamment d'impulsions de type RZ, **caractérisé en ce qu'**il comporte des moyens pour mettre en oeuvre un procédé selon l'une des revendications précédentes.

## Claims

1.   A method of adjusting power for a WDM optical transmission system comprising emitter means (1), an optical transmission line (3), and receiver means (2), the method being **characterized in that** for each wavelength channel, the power emitted for said channel by the emitter means (1) is adjusted as a function of the optical powers received for said channel at a plurality of points distributed along the transmission line (3).

**2.** A method according to claim 1, **characterized in that** the various points distributed along the transmission line (3) are the inlets to amplifiers (5) distributed along said line (3).

**3.** A method according to any preceding claim, **characterized in that** for each channel, a reference power is continuously determined as a function of the optical powers received for said channel at a plurality of points distributed along the transmission line (3), said reference power being the power that ought to be received for said channel at one of the points along the transmission line (3), and the emitter means (1) are controlled so as to servo-control the power at said point on said reference power.

**4.** A method according to claims 2 and 3 taken in combination, **characterized in that** said point is the inlet to the first amplifier (5).

**5.** A method according to claim 3 or claim 4, **characterized in that** for each channel $i$, a parameter $f_i$ is determined which is a function of the powers received at the various points of the transmission line (3), and **in that** the reference power is modified by replacing its preceding value with a reference value that is a function of said preceding value and also of the parameter $f_i$.

**6.** A method according to claim 5, **characterized in that** the new reference power is the product of the preceding reference power and a function of the parameter $f_i$.

**7.** A method according to claim 5, **characterized in that** the parameter $f_i$ is compared with the mean $\bar{f}$ of the parameters $f_i$ as determined for the various channels.

**8.** A method according to any one of claims 5 to 7, **characterized in that** the parameter $f_i$ is such that:

$$f_i = \sum_{j=1,m} P_{ij}^{-1}$$

where $P_{ij}$ represents the power at the jth point of the transmission line (3) for channel $i$ and where $m$ is the number of points of said line.

**9.** A method according to any one of claims 5 to 7, **characterized in that** the parameter $f_i$ is such that:

$$f_i = 1/(P_{i1}.P_{im})^{1/2}$$

**10.** A method according to claims 6 and 7 taken in combination, **characterized in that** the new reference power is the product of the preceding reference value and a product $\eta.f_i$, $\eta$ being a weighting factor selected so that the total power received by the first amplifier is constant.

**11.** An optical transmission system, in particular using RZ type pulses, the system being **characterized in that** it includes means for implementing a method according to any preceding claim.

**Patentansprüche**

**1.** Verfahren zur Leistungsregelung für ein optisches Wellenlängenmultiplex (WDM-Übertragungssystem) mit Sendeeinrichtungen (1), einer optischen Übertragungsleitung (3) und Empfangseinrichtungen (2),
        **dadurch gekennzeichnet, daß** man für jeden Wellenlängenkanal die von den Sendeeinrichtungen (1) für diesen Kanal gesendete Leistung in Abhängigkeit von den optischen Leistungen regelt, die für diesen Kanal an mehreren entlang der Übertragungsleitung (3) verteilten Punkten empfangen werden.

**2.** Verfahren nach Anspruch 1, **dadurch gekennzeichnet, daß** die verschiedenen entlang der Übertragungsleitung (3) verteilten Punkte die Eingänge von entlang dieser Leitung (3) verteilten Verstärkern (5) sind.

**3.** Verfahren nach einem der vorstehenden Ansprüche, **dadurch gekennzeichnet, daß** man fortwährend für jeden Kanal in Abhängigkeit von den optischen Leistungen, die für diesen Kanal an mehreren entlang der Übertragungsleitung (3) verteilten Punkten empfangen werden, eine Soll-Leistung ermittelt, die für diesen Kanal an einem der Punkte der Übertragungsleitung (3) empfangen werden sollte, und daß man die Sendeeinrichtungen (1) auf eine Weise steuert, um die Leistung an diesem Punkt auf diese Soll-Leistung zu regeln.

**4.** Verfahren nach Anspruch 2 in Kombination mit Anspruch 3, **dadurch gekennzeichnet, daß** dieser Punkt der Eingang des ersten Verstärkers (5) ist.

**5.** Verfahren nach einem der Ansprüche 3 und 4, **dadurch gekennzeichnet, daß** man für jeden Kanal

i einen Parameter $f_i$ ermittelt, der von den an den verschiedenen Punkten der Übertragungsleitung (3) empfangenen Leistungen abhängt, und **dadurch**, daß man die Soll-Leistung modifiziert, indem man ihren vorherigen Wert durch einen Sollwert ersetzt, der von dem vorherigen Wert sowie von dem Parameter $f_i$ abhängt.

6. Verfahren nach Anspruch 5, **dadurch gekennzeichnet, daß** die neue Soll-Leistung das Produkt aus dem vorherigen Sollwert und einer Funktion des Parameters $f_i$ ist.

7. Verfahren nach Anspruch 5, **dadurch gekennzeichnet, daß** sich der Parameter $f_i$ aus dem Mittelwert $\bar{f}$ der für die verschiedenen Kanäle ermittelten Parameter $f_i$ berechnet.

8. Verfahren nach einem der Ansprüche 5 bis 7, **dadurch gekennzeichnet, daß** sich der Parameter $f_i$ wie folgt ergibt:

$$f_i = \sum_{j=1,m} P_{ij}^{-1}$$

wobei $P_{ij}$ die Leistung des j-ten Punkts der Übertragungsleitung (3) für den Kanal i darstellt und m die Anzahl der Punkte dieser Leitung ist.

9. Verfahren nach einem der Ansprüche 5 bis 7, **dadurch gekennzeichnet, daß** sich der Parameter $f_i$ wie folgt ergibt:

$$f_i = 1/(P_{i1}.P_{im})^{1/2}$$

10. Verfahren nach Anspruch 6 in Kombination mit Anspruch 7, **dadurch gekennzeichnet, daß** die neue Soll-Leistung das Produkt aus dem vorherigen Sollwert und eines Produkts $\eta \cdot f_i$ ist, wobei $\eta$ ein Wichtungsfaktor ist, der so gewählt ist, daß die von dem ersten Verstärker empfangene Gesamtleistung konstant ist.

11. System zur optischen Übertragung, insbesondere von Impulsen des RZ-Typs, **dadurch gekennzeichnet, daß** es Einrichtungen zur Ausführung eines Verfahrens nach einem der vorstehenden Ansprüche aufweist.

FIG_1

EP 1 245 087 B1